# EUROPÄISCHE PATENTSCHRIFT

(11) **EP 0 969 929 B1**
(45) Veröffentlichungstag und Bekanntmachung des Hinweises auf die Patenterteilung: **18.12.2002**
(21) Anmeldenummer: 98904151.2
(22) Anmeldetag: 28.01.1998
(51) Int. Cl.: B01J 35/04, F01N 3/28

(54) **WABENKÖRPER, INSBESONDERE KATALYSATOR-TRÄGERKÖRPER, MIT VERSTÄRKTER WANDSTRUKTUR**
HONEYCOMB BODY, IN PARTICULAR CATALYST SUPPORT BODY, WITH A REINFORCED WALL STRUCTURE
CORPS EN NID D'ABEILLES, NOTAMMENT CORPS DE SUPPORT DE CATALYSEUR, AVEC UNE PAROI A STRUCTURE RENFORCEE

(30) Priorität: 04.02.1997 DE 19704129
(43) Veröffentlichungstag der Anmeldung: 12.01.2000
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE)
(74) Vertreter: Kahlhöfer, Hermann, Dipl.-Phys.
(86) Internationale Anmeldenummer: EP9800438
(87) Internationale Veröffentlichungsnummer: WO98033592

(56) Entgegenhaltungen:
- WO-A-89/07488
- WO-A-95/32800
- WO-A-96/21503
- US-A- 4 803 189

## Beschreibung

Die vorliegende Erfindung betrifft einen Wabenkörper nach dem Oberbegriff des Anspruchs 1. Solche Wabenkörper werden beispielsweise zur katalytischen Umsetzung von Abgasen eines Verbrennungsmotors verwendet.

Aus der EP 0 436 533 B1 sind Wabenkörper bekannt, die einen gegensinnig verschlungenen Stapel zumindest teilweise strukturierter Bleche in einem Mantelrohr enthalten. Eine oder mehrere der Blechlagen des Stapels weisen eine größere Dicke auf als die übrigen Lagen, wobei diese Lage(n) aus dickerem Blech oder einer Mehrzahl dicht aneinander liegender dünner Bleche besteht (bzw. bestehen). Die dickeren und dünneren Blechlagen bilden Wände von Kanälen, durch die ein Abgasstrom fließen kann. Die Blechlagen sind mit dem Mantelrohr zumindest in Teilbereichen fügetechnisch verbunden. Die dickeren Blechlagen können aufgrund ihrer größeren mechanischen Festigkeit nicht leicht am Mantelrohr abgerissen werden. Darüberhinaus können sie auch die ihnen benachbarten dünneren Blechlagen mit festhalten, so daß auch diese entweder nicht am Mantelrohr abreißen, oder aber zumindest trotz Abriß am Mantelrohr durch die dicke Blechlage festgehalten werden. Die einzelnen Blechlagen des Stapels können untereinander verlötet sein, vorzugsweise an einer der beiden Stirnseiten des Wabenkörpers. Auf die beschriebene Weise entsteht durch die dicken Blechlagen eine den Wabenkörper stabilisierende Wandstruktur.

Aus der WO 96/21503 ist es auch schon bekannt, in einem aus Lagen von zumindest teilweise strukturierten Blechen gleicher Dicke hergestellten Wabenkörper eine Verstärkungsstruktur zu schaffen, indem mindestens eine glatte und eine gewellte Blechlage miteinander an ihren Berührungspunkten verbunden werden. Dies stabilisiert vor allem Wabenkörper aus Blechlagen, die ansonsten untereinander nicht verbunden sind.

Die Entwicklung neuer Wabenkörper verläuft in den letzten Jahren in Richtung der Reduzierung der Wärmekapazität. Bei geringerer Wärmekapazität läßt sich insbesondere ein besseres Kaltstartverhalten beim Einsatz der Wabenkörper in Abgaskatalysatoren erreichen. Die Zündtemperatur, ab der der katalytische Prozeß einsetzt, wird früher erreicht. Neben der Wärmekapazität spielt bei der Entwicklung auch der Druckverlust eine Rolle, der bei einem Gasstrom durch den Wabenkörper auftritt. Der Druckverlust soll möglichst gering sein. Beide Entwicklungsziele, eine geringe Wärmekapazität und ein geringer Druckverlust, lassen sich durch dünne Kanalwände erreichen. Die Kanalwände können aber nicht beliebig dünn gemacht werden, da die Wandstruktur sonst instabil wird und unter thermischer und/oder mechanischer Belastung zerstört wird.

Aufgabe der vorliegenden Erfindung ist es, einen Wabenkörper mit dünnen Kanalwänden anzugeben, der eine hohe Stabilität aufweist.

Die Aufgabe wird erfindungsgemäß durch einen Wabenkörper mit den Merkmalen des Anspruchs 1 gelöst. Vorteilhafte Weiterbildungen sind Gegenstand der abhängigen Ansprüche.

Ein erfindungsgemäßer Wabenkörper weist Blechlagen einer ersten Dicke und Blechlagen einer zweiten Dicke auf, wobei die zweite Dicke größer als die erste Dicke ist. Der Wabenkörper enthält in seinem Innern eine fachwerkartige Struktur, die aus mindestens zwei Blechlagen der zweiten Dicke gebildet ist. Von diesen Blechlagen ist wenigstens eine eine strukturierte Blechlage. Die mindestens zwei Blechlagen sind zumindest stellenweise fügetechnisch miteinander verbunden, vorzugsweise miteinander verlötet.

Unter "einer" Dicke einer Blechlage ist die mittlere Dicke des Blechmaterials zu verstehen, wobei die lokale Dicke um einige Prozent der mittleren Dicke variieren kann.

Die Verbindungsstellen sind punktartig, linienartig oder flächenartig. Fügetechnische Verbindungen existieren vorzugsweise über die gesamte Länge der fachwerkartigen Struktur, d.h. in Durchströmungsrichtung der Kanäle, und quer zur Durchströmungsrichtung der Kanäle. Entscheidend für die Stabilität des Wabenkörpers ist eine ausreichende innere Stabilität der fachwerkartigen Struktur. Die fügetechnischen Verbindungen sind daher vorzugsweise durchgehend oder in geeigneten Abständen vorhanden. Abhängig von der Ausführungsform des Wabenkörpers und von dem Anwendungszweck reicht u.U. aber auch eine fügetechnische Verbindung an den Enden der Kanäle, d.h. an den Stirnseiten des Wabenkörpers aus.

Ein Vorteil der Erfindung ist, daß Wabenkörper mit dünnen Wänden stabil gebaut werden können. Dadurch ist es z. B. möglich, eine hohe Zelldichte zu erreichen, d.h. im Querschnitt des Wabenkörpers eine große Anzahl von Kanälen pro Einheitsfläche, ohne den Nachteil eines hohen Druckverlusts in Kauf nehmen zu müssen. Eine hohe Zelldichte wirkt sich günstig auf die katalytische Umsetzung von Abgasen aus, da eine große katalytisch wirksame Oberfläche pro Einheitsvolumen des Wabenkörpers erzielt werden kann.

In Kaltstartphasen oder Wiederstartphasen eines Verbrennungsmotors mit Abgaskatalysator kommt es auf ein möglichst frühes Erreichen der Zündtemperatur des Katalysators an. Dünne Wände ermöglichen dies aufgrund ihrer geringen Wärmekapzität. Entscheidend ist, daß die Zündtemperatur, wenigstens lokal an den dünnen Wänden, früh erreicht wird. Es ist aber nicht erforderlich, daß sie überall im Katalysator etwa gleichzeitig erreicht wird, da die nach Erreichen der Zündtemperatur ablaufenden chemischen Reaktionen exotherm sind. Die Zonen, in denen die Zündtemperatur erreicht oder überschritten ist, breiten sich daher schnell aus.

Die Verwendung erfindungsgemäßer Wabenkörper führt zu einem frühen Einsetzen des katalytischen Prozesses in Abgaskatalysatoren. Bei ungefähr gleichmäßiger Anströmung der Blechlagen der ersten und der zweiten Dicke von heißem Abgas beginnt der katalytische Prozeß an den (dünneren) Blechlagen der ersten Dicke und breitet sich rasch auf die Blechlagen der zweiten Dicke aus. Im Vergleich zu Wabenkörpern gleicher Wärmekapazität der Blechlagen, jedoch nur mit Blechlagen einer Dicke, setzt der katalytische Prozeß früher ein. Er setzt aber selbst dann noch früher ein, wenn die Wärmekapazität der Blechlagen des erfindungsgemäßen Wabenkörpers größer ist, solange dünnere Blechlagen vorhanden sind.

Das fügetechnische Verbinden geschieht vorzugsweise nach dem Stapeln und/oder Wickeln der Blechlagen. Anderenfalls könnten die Blechlagen der ersten Dicke von den Blechlagen der zweiten Dicke bzw. von der fachwerkartigen Struktur beschädigt werden, z.B. durchreißen.

Die Blechlagen werden vorzugsweise miteinander verlötet. Für das Verlöten der fachwerkartigen Struktur kommen alle bekannten Lötverfahren in Frage, bei denen das Fertigstellen der Verlötung nach dem Stapeln und/oder Wikkeln der Blechlagen möglich ist. Insbesondere lassen sich auch für das Verlöten der fachwerkartigen Struktur und das Verlöten der anderen Blechlagen unterschiedliche Lötverfahren einsetzen. Beispielsweise können zwischen die Blechlagen der fachwerkartigen Struktur Lotfolien oder Lotdrähte eingewickelt werden. Auf diese Weise lassen sich auch im Innern des Wabenkörpers Lötverbindungen innerhalb der fachwerkartigen Struktur erzielen, während die anderen Blechlagen beispielsweise nur an den Stirnseiten des Wabenkörpers miteinander und mit der fachwerkartigen Struktur verlötet werden.

Von dem erfindungsgemäßen Wabenkörper gibt es Ausgestaltungen mit mehreren fachwerkartigen Strukturen, die vorzugsweise gleichmäßig über den Stapel bzw. die Wicklung der Blechlagen verteilt sind.

Ein erfindungsgemäßer Wabenkörper ist beispielsweise, wie in der EP 0 436 533 beschrieben, mit teilweise strukturierten Blechen aufgebaut. Die durch Blechlagen gebildeten Kanalwände haben vorzugsweise eine über die axiale Länge des Wabenkörpers etwa gleichbleibende Dicke. Es gibt aber auch Ausgestaltungen, bei denen die verstärkte fachwerkartige Wandstruktur sich nur über einen oder mehrere Teilbereiche der axialen Länge des Wabenkörpers erstreckt. Dies kann beispielsweise durch abschnittsweises Verstärken der Blechlagen mit kürzeren Blechlagen erreicht werden.

Bei einer weiteren Ausgestaltung mit strukturierten Blechlagen weisen die Strukturen linienartige Höhenrücken auf, mit denen sie benachbarte Blechlagen berühren. Mindestens zwei benachbarte, so strukturierte Blechlagen berühren sich mit zueinander gekreuzt verlaufenden Höhenrücken, so daß sie sich nur annähernd punktweise berühren. Diese Blechlagen sind Blechlagen der zweiten Dicke und sind an einer Vielzahl der Berührungspunkte fügetechnisch miteinander verbunden, vorzugsweise miteinander verlötet, so daß sich eine dreidimensionale fachwerkartige Wandstruktur ergibt, die den Wabenkörper stabilisiert.

Ein Vorteil des erfindungsgemäßen Wabenkörpers ist, daß auch Kräfte über die fachwerkartige Wandstruktur abgeleitet werden können, die in Richtungen an der fachwerkartigen Wandstruktur angreifen, in denen, jedenfalls an den Angriffsstellen, keine Blechlagen der zweiten Dicke verlaufen.

Ein weiterer Vorteil des erfindungsgemäßen Wabenkörpers ist ein günstiges Schwingungsverhalten. Durch ihre stabile Konstruktion ist die fachwerkartige Struktur schwingungsunempfindlich. Außerdem reduziert sie aber auch die Schwingungslängen, senkrecht zur axialen Länge des Wabenkörpers, der Bereiche mit dünneren Blechlagen. Diese Schwingungslängen können auf einen bestimmten Einsatzzweck des Wabenkörpers abgestimmt sein. Es ist darauf zu achten, daß keine Resonanzschwingungen der Wabenstruktur angeregt werden.

Bei einer Weiterbildung des erfindungsgemäßen Wabenkörpers ist ein größerer Teil der Kanalwandflächen im Innern des Wabenkörpers von den Blechlagen der ersten Dicke als von den Blechlagen der zweiten Dicke gebildet, wobei die erste Dicke mindestens 20 % kleiner als die zweite Dicke ist.

Bei einer Ausgestaltung des Wabenkörpers weist die erste Dicke einen Wert zwischen 15 µm und 50 µm auf, vorzugsweise etwa 20 - 30 µm.

Bei einer vorteilhaften Weiterbildung des Wabenkörpers weist dieser ein Mantelrohr auf, in dessen Innern die Blechlagen angeordnet sind, wobei die fachwerkartige Struktur eine Mehrzahl von Mantelverbindungsstellen aufweist, an denen jeweils mindestens eine ihrer Blechlagen der zweiten Dicke mit dem Mantelrohr verbunden ist. Auf diese Weise kann eine stabile Einheit aus Mantelrohr und fachwerkartiger Struktur aufgebaut werden. Vorteilhaft ist eine Weiterbildung davon, bei der zwei Mantelverbindungsstellen durch die fachwerkartige Struktur miteinander verbunden sind.

Bei einer Ausgestaltung des erfindungsgemäßen Wabenkörpers sind für ein Fluid durchströmbare, etwa parallel verlaufende und etwa gegeneinander abgeschlossene Kanäle mit gestapelten und/oder gewickelten Blechlagen gebildet, von denen zumindest ein Teil strukturierte Blechlagen sind, wobei die Ausgestaltung Blechlagen der zweiten Dicke aufweist, mit denen die fachwerkartige Struktur gebildet ist. Die Blechlagen der zweiten Dicke sind an Berührungsstellen mit wenigstens einer anderen Blechlage der zweiten Dicke fügetechnisch verbunden, vorzugweise verlötet, und/oder gehen dort in eine andere Blechlage der zweiten Dicke über. D.h. die ineinander übergehenden Blechlagen sind Teile desselben Blechs. Diese Ausführungsform umfaßt spiralig gewickelte Wabenkörper, S-förmig aufgebaute Wabenkörper und andere Ausführungsformen bisher bekannter Wabenkörper mit gestapelten und/oder gewickelten Blechlagen. Bei bestimmten Varianten dieser Ausführungsform wird die fachwerkartige Struktur aus einem oder mehreren Blechen der ersten Dicke gebildet, die abschnittsweise durch mit ihnen fügetechnisch verbundene Blechstreifen verstärkt sind. Diese Abschnitte bilden die Kanalwände der zweiten Dicke.

Bei einer weiteren Ausgestaltung weist die fachwerkartige Wandstruktur eine Vielzahl von benachbarten Blechlagen der zweiten Dicke auf, die miteinander, jeweils paarweise, eine Vielzahl von Verbindungsstellen haben, wobei wenigstens eine der Blechlagen eine strukturierte Blechlage ist.

Bei einer Weiterbildung erstreckt sich die fachwerkartige Struktur mit zwei oder mehr Blechlagen, im Querschnitt des Wabenkörpers betrachtet, etwa entlang einer spiralarmartig verlaufenden Linie, vorzugsweise etwa entlang einer Evolvente. Bei noch einer Weiterbildung weist der Wabenkörper im Querschnitt eine Mehrzahl von fachwerkstrukturierten Spiralarmen auf. Die Spiralarme sind im Bereich eines Spiralkerns miteinander verbunden, wobei die Spiralarme am Spiralkern vorzugsweise etwa gleich große Winkel zwischen sich einschließen. Der Winkel ist hierbei zwischen den Verbindungslinien des Zentrums des Spiralkerns zu den Ansatzstellen der Spiralarme am Spiralkern zu messen. Die Spiralarme, der Spiralkern und ggf. ein mit den äußeren Enden der Spiralarme verbundenes Mantelrohr bilden ein stabiles Gerippe, zwischen dem die Kanalwände der ersten Dicke angeordnet sind. Bei einer Variante dieser Weiterbildung sind die inneren Enden der Spiralarme nicht über einen Spiralkern miteinander verbunden, sondern direkt miteinander verbunden. Hierbei teilen die Spiralarme jeden imaginären Kreis mit Mittelpunkt in der Nähe des Verbindungsbereiches der Spiralarme, dessen Umfangslinie von den Spiralarmen geschnitten wird, in etwa gleich große Stücke auf.

Bei einer weiteren Ausführungsform weist der Wabenkörper einen ähnlich wie in der EP 0 436 533 B1 beschriebenen Aurbau mit einem gegensinnig verschlungenen Stapel von Blechlagen auf, wobei die fachwerkartige Struktur etwa in der Mitte des Stapels liegt. Bei einer Weiterbildung enthält der Stapel weitere fachwerkartige Strukturen, vorzugsweise so, daß zwischen den fachwerkartigen Strukturen gleich viele Blechlagen liegen.

Ausführungsformen des erfindungsgemäßem Wabenkörpers werden anhand der Zeichnung beschrieben. Diese Ausführungsformen sind Beispiele, auf die die Erfindung jedoch nicht beschränkt ist.

Die einzelnen Figuren der Zeichnungen zeigen:
- Fig. 1: einen Wabenkörper mit einem gegensinnig verschlungenen Stapel teilweise strukturierter Blechlagen im Querschnitt,
- Fig. 2: einen Wabenkörper mit spiralig gewickelten Blechlagen im Querschnitt,
- Fig. 3 bis Fig. 5: fachwerkartige Strukturen mit benachbarten Blechlagen im Profil und

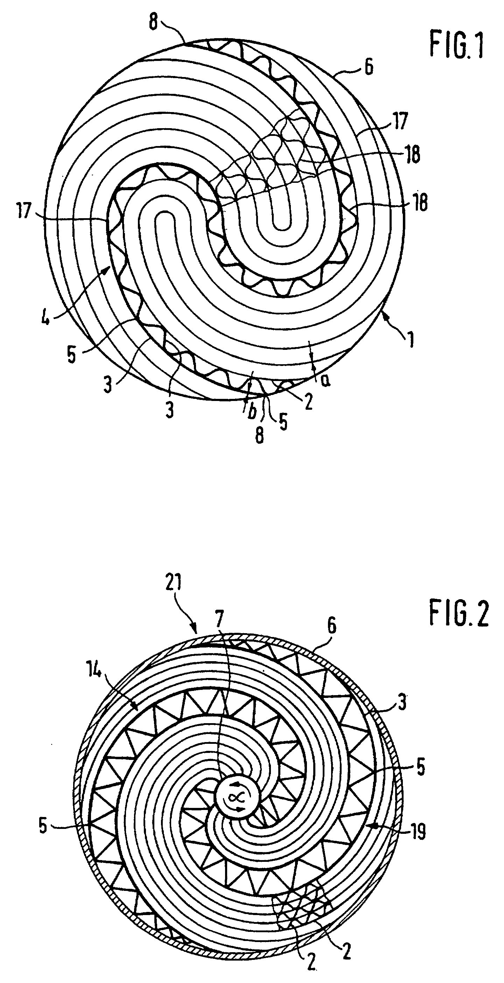

Fig. 1 zeigt einen erfindungsgemäßen Wabenkörper 1 mit einem gegensinnig verschlungenen Stapel aus einander abwechselnden glatten 17 und strukturierten 18 Blechlagen. Der Stapel enthält etwa in seiner Mitte eine fachwerkartige Struktur 4 mit einer Vielzahl von Verbindungsstellen 5, die aus zwei benachbarten Blechlagen 3 aufgebaut ist. Diese Blechlagen 3 sind Blechlagen der zweiten Dicke b. Die anderen gegensinnig verschlungenen Blechlagen sind Blechlagen 2 der ersten Dicke a. Der Stapel ist im Innern eines Mantelrohrs 6 angeordnet, wobei die fachwerkartige Struktur 4 an Mantelverbindungsstellen 8 mit dem Mantelrohr 6 verlötet ist. Die Lötverbindung(en) zwischen dem Mantelrohr 6 und der fachwerkartigen Wandstruktur 4 erstreckt (erstrecken) sich vorzugsweise nur über (einen) Teilabschnitt(e) der axialen Länge des Mantelrohrs (nicht in der Zeichnung gezeigt), um unterschiedliche thermisch bedingte Längenänderungen des Mantelrohrs 6 und der Wandstruktur zu ermöglichen. Die Blechlagen 2, 3 der ersten a und der zweiten b Dicke können an einem Teil oder allen ihren Berührungsstellen miteinander verlötet sein.

In Fig. 2 ist ein Wabenkörper 21 mit gewickelten Blechlagen 2, 3 dargestellt, die sich im Querschnitt etwa entlang von Evolventen erstrecken. Ungefähr in der Mittelachse des Wabenkörpers 21 liegt ein Spiralkern 7 in Form eines Hohlzylinders, mit dem die Blechlagen 2, 3 verbunden sind. Der Wabenkörper 21 weist zwei fachwerkartige Wandstrukturen 14 auf, die im Querschnitt spiralarmartigen Linien folgen. Sie sind jeweils aus drei Blechlagen 3, zwei glatten und dazwischen einer strukturierten, aufgebaut und sind etwa zueinander symmetrisch in bezug auf die Mittelachse des Wabenkörpers 21 angeordnet. Der Winkel α, den sie am Spiralkern 7 zwischen sich einschließen, beträgt daher ungefähr 180°.

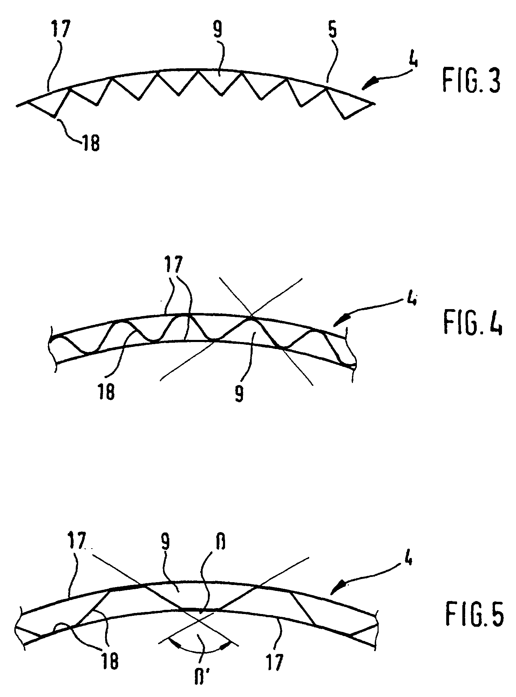

In Fig. 3 bis Fig. 5 ist jeweils ein Abschnitt einer fachwerkartigen Struktur 4 mit mindestens einer glatten Blechlage 17 und einer strukturierten Blechlage 18 zu sehen, die beide die zweite Dicke haben und eine Vielzahl von Verbindungsstellen 5 aufweisen. Die fachwerkartige Struktur 4 in Fig. 3 weist dreieckige umrandete Kanäle 9 auf. Die Kanäle 9 in Fig. 4 sind, im Querschnitt, annähernd dreieckig. Am Beispiel eines Kanals 9 sind mit zwei gestrichelten Linien die geraden Linien angedeutet, entlang derer zwischen den beiden glatten Blechlagen 17 die gewellte Blechlage 18 verläuft. Von den glatten Blechlagen 17 hat mindestens eine die zweite Dicke. Die Blechlagen 17; 18 der zweiten Dicke sind an einer Vielzahl ihrer Verbindungsstellen fügetechnisch miteinander verbunden. Ist die zweite glatte Blechlage 17 in Fig. 4 eine Blechlage der ersten Dicke, so ist diese vorzugsweise auch an einer Vielzahl ihrer Berührungsstellen zu der strukturierten Blechlage 18 fügetechnisch mit dieser verbunden. Fig. 5 zeigt Kanäle 9 mit trapezförmiger Querschnittsfläche. Mit gestrichelten Linien ist die Richtung angedeutet, entlang derer sich die Fachwerkwandzüge der strukturierten Blechlage 18 erstrecken, die die beiden glatten Blechlagen 17 miteinander verbinden. Die beiden gestrichelten Linien schneiden sich außerhalb der Fachwerkzelle 9 mit einem Innenwinkel β. Eingezeichnet in Fig. 5 ist weiterhin der dem Winkel β gleichende Gegenwinkel β'. Durch die gestrichelten Linien ist die grundsätzlich im Querschnitt dreieckige Fachwerkkonstruktion erkennbar, die der Struktur ihre Stabilität verleiht.

Wie die Beispiele zeigen, weisen Ausgestaltungen des erfindungsgemäßen Wabenkörpers einen ähnlichen Aufbau auf wie bisher bekannte Wabenkörper. Sie können, lediglich mit geringfügigen Änderungen, nach den gleichen Verfahren wie die bisher bekannten Wabenkörper hergestellt werden. Wabenkörper mit fachwerkartigen Strukturen sind daher zu etwa den gleichen Kosten herstellbar, ermöglichen jedoch die Verwendung dünnerer Blechlagen bzw. haben eine größere Stabilität als bisher bekannte Wabenkörper.

### Bezugszeichenliste

- 1: Wabenkörper
- 2: Blechlage der ersten Dicke
- 3: Blechlage der zweiten Dicke
- 4: fachwerkartige Struktur
- 5: Verbindungsstelle
- 6: Mantelrohr
- 7: Spiralkern
- 8: Mantelverbindungsstelle
- 9: Kanal
- 14: fachwerkartige Struktur mit drei Blechlagen
- 17: glatte Blechlage
- 18: strukturierte Blechlage
- 21: Wabenkörper mit evolventenförmigen Fachwerkstrukturen
- a: erste Dicke
- b: zweite Dicke
- α: Winkel
- β: Innenwinkel
- β': Gegenwinkel, entspricht Innenwinkel

## Patentansprüche

1. Wabenkörper (1; 21), insbesondere Katalysator-Trägerkörper, mit gestapelten und/oder gewickelten Blechlagen (17; 18), von denen zumindest ein Teil strukturierte Blechlagen (18) sind, so daß für ein Fluid durchströmbare Kanäle (9) gebildet sind, wobei ein Teil der Blechlagen (17; 18) eine erste Dicke (a) und ein Teil der Blechlagen (17; 18) eine zweite Dicke (b) aufweist, die größer als die erste Dicke (a) ist, **dadurch gekennzeichnet, daß** der Wabenkörper (1; 21) in seinem Innern eine fachwerkartige Struktur (4; 14) enthält, die aus mindestens zwei Blechlagen (17; 18) der zweiten Dicke (b) gebildet ist, von denen wenigstens eine eine strukturierte Blechlage (18) ist und die zumindest stellenweise fügetechnisch miteinander verbunden sind, wobei ein größerer Teil von Kanalwandflächen im Innern des Wabenkörpers (1; 21) von den Blechlagen (2) der ersten Dicke (a) als von den Blechlagen (3) der zweiten Dicke (b) gebildet ist, und wobei die erste Dicke (a) einen Wert zwischen 15 µm und 50 µm hat.

2. Wabenkörper nach Anspruch 1, **dadurch gekennzeichnet, daß** die zweite Dicke (b) mindestens 20 % größer als die erste Dicke (a) ist.

3. Wabenkörper nach Anspruch 1 oder 2, **dadurch gekennzeichnet, daß** die erste Dicke (a) einen Wert zwischen etwa 20 bis 30 µm.

4. Wabenkörper nach einem der Ansprüche 1 bis 3 mit einem Mantelrohr (6), in dessen Innern die Blechlagen (17; 18) angeordnet sind, **dadurch gekennzeichnet, daß** die fachwerkartige Struktur (4; 14) eine Mehrzahl von Mantelverbindungsstellen (8) aufweist, an denen jeweils mindestens eine ihrer Blechlagen (17; 18) der zweiten Dicke (b) mit dem Mantelrohr (6) verbunden ist.

5. Wabenkörper nach Anspruch 4, **dadurch gekennzeichnet, daß** zwei Mantelverbindungsstellen (8) durch die fachwerkartige Struktur (4; 14) miteinander verbunden sind.

6. Wabenkörper nach einem der Ansprüche 1 bis 5, **dadurch gekennzeichnet, daß** eine Blechlage (3) der zweiten Dicke (b) mit einer benachbart gestapelten und/oder gewickelten Blechlage (2) der ersten Dicke (a) fügetechnisch verbunden ist.

7. Wabenkörper nach einem der Ansprüche 1 bis 6, **dadurch gekennzeichnet, daß** die mindestens eine strukturierte Blechlage (18) der fachwerkartigen Struktur (4) eine gewellte Blechlage ist, die zumindest an einem Teil ihrer Wellscheitel fügetechnisch mit einer benachbarten glatten Blechlage (17) der zweiten Dicke (b) verbunden ist.

8. Wabenkörper nach einem der Ansprüche 1 bis 7, **dadurch gekennzeichnet, daß** sich die fachwerkartige Wandstruktur (14) im Querschnitt etwa entlang einer spiralarmartig verlaufenden Linie, vorzugsweise etwa entlang einer Evolvente erstreckt.

9. Wabenkörper nach Anspruch 8, **dadurch gekennzeichnet, daß** der Wabenkörper (21) eine Mehrzahl von fachwerkstrukturierten Spiralarmen (14) aufweist und daß die Spiralarme (14) im Bereich eines Spiralkerns (7) miteinander verbunden sind, wobei die Spiralarme (14) am Spiralkern (7) vorzugsweise etwa gleich große Winkel (α) zwischen sich einschließen.

10. Wabenkörper nach einem der Ansprüche 1 bis 7 mit einem gegensinnig verschlungenen Stapel der Blechlagen (17; 18), **dadurch gekennzeichnet, daß** die fachwerkartige Wandstruktur (4) etwa in der Mitte des Stapels liegt.

## Claims

1. A honeycomb body (1; 21), in particular a catalyst carrier body, with stacked and/or wound sheet metal layers (17; 18) of which at least some are structured sheet metal layers (18) so that passages (9) through which a fluid can flow are formed, wherein a part of the sheet metal layers (17; 18) are of a first thickness (a) and a part of the sheet metal layers (17; 18) are of a second thickness (b) which is greater than the first thickness (A) **characterised in that** in its interior the honeycomb body (1; 21) includes a lattice structure (4; 14) which is formed from at least two sheet metal layers (17; 18) of the second thickness (b), of which at least one is a structured sheet metal layer (18) and which are connected together at least at places by a procedure involving intimate joining of the materials involved, wherein a larger part of passage wall surfaces in the interior of the honeycomb body (1; 21) is formed by the sheet metal layers (2) of the first thickness (a) than by the sheet metal layers (3) of the second thickness (b), and wherein the first thickness (a) is of a value of between 15 µm and 50 µm.

2. A honeycomb body according to claim 1 **characterised in that** the second thickness (b) Is at least 20% greater than the first thickness (a).

3. A honeycomb body according to claim 1 or claim 2 **characterised in that** the first thickness (a) is of a value of between about 20 and 30 µm.

4. A honeycomb body according to one of claims 1 to 3 comprising a tubular casing (6), in the interior of which the sheet metal layers (17; 18) are arranged, **characterised in that** the lattice structure (4; 14) has a plurality of casing connecting locations (8), at each of which at least one of the sheet metal layers (17; 18) thereof, of the second thickness (b), is connected to the tubular casing (6).

5. A honeycomb body according to claim 4 **characterised in that** two casing connecting locations (8) are connected together by the lattice structure (4; 14).

6. A honeycomb body according to one of claims 1 to 5 **characterised in that** a sheet metal layer (3) of the second thickness (b) is connected by a procedure involving intimate joining of the materials involved to an adjacently stacked and/or wound sheet metal layer (2) of the first thickness (a).

7. A honeycomb body according to one of claims 1 to 6 **characterised in that** the at least one structured sheet metal layer (18) of the lattice structure (4) is a corrugated sheet metal layer which at least at a part of its corrugation crests is connected by a procedure involving intimate joining of the materials involved to an adjacent smooth sheet metal layer (17) of the second thickness (b).

8. A honeycomb body according to one of claims 1 to 7 **characterised in that** in cross-section the lattice wall structure (14) extends substantially along a line extending in the manner of a spiral arm, preferably substantially along an involute.

9. A honeycomb body according to claim 8 **characterised in that** the honeycomb body (21) has a plurality of lattice-structured spiral arms (14) and that the spiral arms (14) are connected together in the region of a spiral core (7), wherein the spiral arms (14) preferably include substantially equal angles (α) between them at the spiral core (7).

10. A honeycomb body according to one of claims 1 to 7 with an oppositely wound stack of the sheet metal layers (17; 18) **characterised in that** the lattice wall structure (4) is approximately at the centre of the stack.

## Revendications

1. Corps en nids d'abeilles (1 ; 21), notamment corps support de catalyseur comportant des couches de tôles empilées et/ou enroulées (17 ; 18), dont au moins une partie sont des couches de tôles structurées (18), de sorte que des canaux (9) pouvant être traversés par un fluide sont formés, dans quel cas une partie des couches de tôles (17; 18) présente une première épaisseur (a) et une partie des couches de tôles (17 ; 18) une deuxième épaisseur (b) qui est supérieure à la première épaisseur (a), **caractérisé en ce que** le corps en nids d'abeilles (1 ; 21) comporte dans son intérieur une structure à la façon de charpentes (4 ; 14), qui est formée d'au moins deux couches de tôles (17 ; 18) de la deuxième épaisseur (b), dont au moins une est une couche de tôle structurée (18), et qui sont au moins par endroits reliées par technique de jointoiement, dans quel cas une plus grande partie de surfaces de parois de canaux à l'intérieur du corps en nids d'abeilles (1 ; 21) est formée par les couches de tôles (2) de la première épaisseur (a) que par les couches de tôles (3) de la deuxième épaisseur (b) et dans quel cas la première épaisseur (a) a une valeur entre 15 µm et 50 µm.

2. Corps en nids d'abeilles selon la revendication 1, **caractérisé en ce que** la deuxième épaisseur (b) est au moins 20 % plus grande que la première épaisseur (a).

3. Corps en nids d'abeilles selon la revendication 1 ou 2, **caractérisé en ce que** la première épaisseur (a) a une valeur entre environ 20 à 30 µm.

4. Corps en nids d'abeilles selon l'une des revendications 1 à 3 comportant un tube d'enveloppe (6), à l'intérieur duquel les couches de tôles (17 ; 18) sont agencées, **caractérisé en ce que** la structure à la façon de charpentes (4; 14) présente une pluralité d'endroits de liaison d'enveloppe (8) sur lesquels respectivement au moins une de ses couches de tôles (17; 18) de la deuxième épaisseur (b) est reliée au tube d'enveloppe (6).

5. Corps en nids d'abeilles selon la revendication 4, **caractérisé en ce que** deux endroits de liaison d'enveloppe (8) sont reliés les uns aux autres par la structure à la façon de charpentes (4 ; 14).

6. Corps en nids d'abeilles selon l'une des revendications 1 à 5, **caractérisé en ce qu'**une couche de tôle (3) de la deuxième épaisseur (b) est reliée par technique de jointoiement avec une couche de tôle (2) de la première épaisseur (a) empilée et/ou enroulée de manière adjacente.

7. Corps en nids d'abeilles selon l'une des revendications 1 à 6, **caractérisé en ce que** l'au moins une couche de tôle structurée (18) de la structure à la façon de charpentes (4) est une couche de tôle ondulée, qui sur au moins une partie de ses crêtes d'ondulation est reliée par technique de jointoiement avec une couche de tôle lisse (17) adjacente de la deuxième épaisseur (b).

8. Corps en nids d'abeilles selon l'une des revendications 1 à 7, **caractérisé en ce que** la structure de paroi à la façon de charpentes (14) s'étend en section environ le long d'une ligne s'étendant à la façon d'un bras spiral, de préférence environ le long d'une développante.

9. Corps en nids d'abeilles selon la revendication 8, **caractérisé en ce que** le corps en nids d'abeilles (21) présente une pluralité de bras spiraux structurés en charpente (14) et **en ce que** les bras spiraux (14) sont reliés les uns aux autres dans la zone d'un noyau de spirale (7), les bras spiraux (14) enfermant entre eux au niveau du noyau de spirale (7) de préférence des angles (α) qui sont environ égaux.

10. Corps en nids d'abeilles selon l'une des revendications 1 à 7 avec un empilement vrillé tête-bêche des couches de tôles (17 ; 18), **caractérisé en ce que** la structure de paroi à la façon de charpentes (4) se trouve environ au centre de la pile.
